# EUROPÄISCHE PATENTSCHRIFT

(11) **EP 4 385 908 B1**
(45) Veröffentlichungstag und Bekanntmachung des Hinweises auf die Patenterteilung: **26.03.2025**
(21) Anmeldenummer: 23214210.9
(22) Anmeldetag: 05.12.2023
(51) Int. Cl.: B64U 60/00, F41H 13/00, B64U 101/15

(54) **HPEM-DROHNE MIT AM LANDEGESTELL INTEGRIERTEN HORN**
HPEM DRONE WITH A HORN INTEGRATED ON THE LANDING GEAR
DRONE HPEM AVEC CONE INTEGREE A L'ATTERRISSAGE

(30) Priorität: 15.12.2022 DE 102022004723
(43) Veröffentlichungstag der Anmeldung: 19.06.2024
(73) Patentinhaber: Diehl Defence GmbH & Co. KG, 88662 Überlingen (DE)
(72) Erfinder: Stahlmann, Christoph, 90489 Nürnberg (DE)
(74) Vertreter: Diehl Patentabteilung

(56) Entgegenhaltungen:
- DE-A1- 102015 008 296
- US-A1- 2020 363 167
- US-A1- 2021 356 237
- US-A1- 2022 146 236
- USHAKOV V N ET AL: "Project start-up for ultra wideband radar based on ultrashort pulse plasma generator", 2017 RADIATION AND SCATTERING OF ELECTROMAGNETIC WAVES (RSEMW), IEEE, 26 June 2017 (2017-06-26), pages 27 - 281, XP033251905, DOI: 10.1109/RSEMW.2017.8103649

## Beschreibung

Die Erfindung betrifft eine Drohne zur Bekämpfung eines Ziels mit Hilfe eines HPEM-Pulses.

Aus der DE 10 2015 008 296 A1 ist eine solche Drohne in Form einer Abwehrdrohne zur Bekämpfung eines Ziels in Form der Abwehr einer Kleindrohne bekannt, umfassend: zumindest einen Motor zum Antrieb zumindest eines Propellers, einen mit dem Motor verbundenen Rumpf und eine am Rumpf befestigte HPEM-Einrichtung zur Erzeugung eines HPEM-Pulses in Form eines hochenergetischen elektromagnetischen Pulses, wobei eine Erkennungseinrichtung zur Erkennung der fliegenden Kleindrohne und zum automatischen Steuern in Richtung der Kleindrohne vorgesehen ist.

Eine weitere, gattungsgemäße Drohne ist aus US 2021/356237 A1 bekannt.

Aufgabe der vorliegenden Erfindung ist es, Verbesserungen in Bezug auf eine derartige Drohne zur Bekämpfung eines Ziels mithilfe eines HPEM Pulses anzugeben.

Die Aufgabe wird gelöst durch eine Drohne gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Drohne dient bzw. ist eingerichtet zur Bekämpfung eines Ziels mithilfe eines geformten HPEM Pulses. Die Drohne ist zu einem Flug, insbesondere Start und/oder Landung, entlang einer Schwerkraftrichtung eingerichtet. Mit anderen Worten ist die Drohne zu einem Senkrechtstart und / oder einer Senkrechtlandung eingerichtet. Die Drohne ist daher insbesondere eine Helikopter- oder Multicopter-Drohne, zum Beispiel ein Quadrocopter oder Octocopter. Eine derartige Drohne wird auch unbemanntes Luftfahrzeug (unmanned aerial vehicle, UAV) genannt.

Die Drohne enthält ein Landegestell. Das Landegestell ist dazu eingerichtet, die restliche Drohne (also die Drohne mit Ausnahme des Landegestells) in einem bestimmungsgemäßen Landezustand zu tragen. "Bestimmungsgemäß" heißt hier, dass die Drohne eben wie geplant bzw. vorgesehen auf dem Landegestell auf einem Untergrund steht und nicht z.B. umgestürzt ist. Ein solcher Landezustand ist also derjenige, wenn die Drohne sich in Ruhe befindet, also nicht fliegt und auf einem Untergrund ruht, z.B. vor einem Start oder nach einer Landung. Ein Landegestell ist insbesondere nötig, um mithilfe dessen einen Senkrechtstart oder eine Senkrechtlandung durchführen zu können. Mit anderen Worten kann die Drohne so ohne Zuhilfenahme sonstiger Haltevorrichtungen auf einem Untergrund landen oder von diesem abheben oder auf dem Untergrund ruhen.

Die Drohne enthält eine HPEM Quelle. Diese dient bzw. ist eingerichtet zur Abstrahlung des oben genannten HPEM Pulses, jedoch in noch ungeformtem Zustand. Von der HPEM Quelle wird im Betrieb also zunächst der ungeformte HPEM-Puls ausgesendet.

Zumindest in einem Arbeitszustand der Drohne gilt: die Drohne enthält ein Horn. Das Horn ist der HPEM Quelle strahlungstechnisch (bezogen auf die Abstrahlung des HPEM-Pulses) nachgeschaltet. Das Horn ist dazu eingerichtet, den aus der HPEM Quelle in das Horn eingestrahlten ungeformten HPEM Puls zu führen und in einer Strahlrichtung als geformten HPEM Puls wieder abzustrahlen. Die Strahlrichtung ist dabei fest am Horn bzw. der gesamten Drohne orientiert, gibt also an in welcher Relativrichtung zur Drohne der geformte HPEM-Puls abgestrahlt wird. Die strahlungstechnische Nachschaltung bezieht sich also auf den Strahlungsweg des zunächst ungeformt und später geformten Pulses.

Der Arbeitszustand ist derjenige Zustand, in dem die Drohne dazu in der Lage ist, den HPEM-Puls auszusenden, und diesen durch das Horn zu formen. "Zumindest in dem Arbeitszustand" ist dabei stets so zu verstehen, dass die Drohne auch andere Zustände als den Arbeitszustand einnehmen kann. In diesen müssen dann die entsprechend genannten Eigenschaften jeweils nicht erfüllt sein. Zum Beispiel kann die Drohne auch einen Stauzustand einnehmen, in dem dann überhaupt kein eigentliches Horn vorhanden ist, da diese ungespannt, eingefaltet oder von der restlichen Drohne entfernt ist. Dies wird weiter unten näher erläutert.

Zumindest in dem oben genannten Arbeitszustand ist zumindest ein Teil des Horns durch zumindest einen Teil des Landegestells gebildet.

Der Beitrag, den das Landegestell zum Horn liefert kann entweder derart sein, dass tatsächlich ein struktureller Teil des Horns selbst durch das Bein gebildet wird, z.B. eine Längsstrebe / Rippe, siehe unten. Der Beitrag kann aber auch in einem rein mechanischen Beitrag bestehen, z.B. darin, dass eine das Horn bildende Struktur, z.B. ein Stahlgewebe, durch die Beine zumindest teilweise gehalten bzw. gespannt wird.

Dank des Horns ist die Drohne dazu fähig, nicht nur den ungeformten, sondern einen durch das Horn geformten (die Formung geht insbesondere mit einer Verstärkung einher) HPEM Puls auszusenden. Die Bekämpfung von Zielen wird hierdurch verbessert.

Zusätzlich erfolgt jedoch mit anderen Worten zumindest eine Teilintegration von Horn und Landegestell. Insgesamt wird so eine zumindest teilweise Doppelfunktionalität zwischen Horn und Landegestell erreicht, was insbesondere zu einer Material- und/oder Gewichtseinsparungen an der Drohne führen kann.

In einer bevorzugten Ausführungsform weist die Strahlrichtung zumindest im bestimmungsgemäßen Landezustand der Drohne in Richtung der Schwerkraftrichtung. Der Landezustand wird hier zu Zwecken der Richtungsdefinition eingeführt. Denn in diesem Landezustand steht die Drohne auf ihrem Landegestell, was folgerichtig daher "nach unten", also in Richtung der Schwerkraft unterhalb eines Grundkörpers der Drohne angeordnet ist. Da auch das Horn in diese Richtung abstrahlen soll, ist dieses auch "unten" an der Drohne angeordnet. Somit ist die zumindest teilweise Integration von Landegestellt und Horn besonders vorteilhaft.

All dies gilt selbstverständlich wieder ggf. zumindest im Arbeitszustand, wenn ein Horn tatsächlich vorhanden ist. Voraussetzung für diese Ausführungsform ist jedenfalls, dass das Horn insofern vollständig besteht, dass diesem die Strahlrichtung zugeordnet ist. Mit anderen Worten zeigt die Strahlrichtung an der Drohne also "nach unten" bzw. in eine Landerichtung.

In einer bevorzugten Ausführungsform ist das Horn (zumindest im Arbeitszustand, siehe oben) bezüglich der Strahlrichtung im Querschnitt rund oder oval oder eckig ausgeführt. Die entsprechende Form bezieht sich zumindest auf eine Horn-Grundform, -Einhüllende bzw. Flächenform des Horns. Dies gilt z.B. dann wenn das Horn nur zum Teil durch Material tatsächlich gebildet ist und ansonsten auch Auslassungen / Durchbrechungen aufweist. Dies gilt zum Beispiel, wenn das Horn als Draht-, Rippen- oder Strebenkonstruktion / Gitter / Gewebe / Käfig usw. ausgeführt ist, wie weiter unten erläutert wird. Die eckige Form ist insbesondere eine viereckige, insbesondere rechteckige, insbesondere quadratische Form. Derartige Hornformen haben sich in der Praxis als besonders effektiv erwiesen.

In einer bevorzugten Ausführungsform ist das Horn zusammen mit dem Landegestell zwischen einer Stauposition (Horn/Landegestell in einem Stauzustand) und der Arbeitsposition (Horn/Landegestell in einem Arbeitszustand) veränderbar. Wenigstens sind Horn und Landegestell dabei von der Arbeitsposition in die Stauposition oder aus der Stauposition in die Arbeitsposition bringbar. Die Veränderbarkeit ist zum Beispiel eine Teleskopierbarkeit, Klappbarkeit, Verformbarkeit oder sonstige Formänderung. Wie oben erläutert ist in der Stauposition dann gegebenenfalls überhaupt kein tatsächliches Horn mehr vorhanden, sondern vielmehr nur noch ein erst in der Arbeitsposition wieder zu dem Horn hin veränderbares / transformierbares Horn-Grundelement. Ein solches ist z.B. das weiter unten genannte Hornelement, zum Beispiel eine eingefaltete Struktur, die erst in der Arbeitsposition wieder zu einem tatsächlichen Horn entfaltbar ist. Zum Beispiel könnte das Horn nach Art eines Regenschirms oder einer Wäschespinne in der Arbeitsposition aufgespannt und in der Stauposition eingefaltet, zusammengelegt sein usw. Eine entsprechende Stauposition vereinfacht zum Beispiel den Transport einer entsprechenden Drohne.

In einer bevorzugten Ausführungsform weist das Landegestell wenigstens drei, insbesondere vier, an einem Grundkörper der Drohne befestigte Beine auf. Das Horn ist dann durch zumindest einen Hornanteil der Beine und einen an den Beinen angebrachten (unmittelbar oder mittelbar) Hornkörper gebildet. Der Hornanteil ist also ein Abschnitt oder Teil des jeweiligen Beins, der einen Beitrag zum Horn liefert. Ein zumindest Teil der Beine bildet also zumindest einen Teil des Horns. Zusammen mit dem Hornkörper ergibt sich dann insbesondere bereits das gesamte Horn. Der Hornkörper kann z.B. ein metallisches Geflecht, eine Platte oder Folie oder eine Reihe paralleler gespannter Drähte sein.

Wenigstens eines, insbesondere alle, der Beine kann dabei ein elektrisch leitendes Material, zum Beispiel Metall, enthalten oder aus diesem bestehen. Insbesondere ist dieser metallische Teil geeignet, einen Teil des Horns, z.B. eine Längsstrebe, zu bilden. Wenigstens eines, insbesondere alle, der Beine kann jedoch auch aus einem elektrisch nichtleitenden Material bestehen oder dieses enthalten, wie zum Beispiel einen Harz-Faserwerkstoff oder Kunststoff. In diesem Fall leistet das Bein insbesondere einen mechanischen Trage- oder Stützbeitrag zum Horn. Dann kann zum Beispiel ein zusätzlicher elektrischer Leiter am Bein oder parallel zum Bein vorgesehen sein, um sonstige Komponenten des Horns, z.B. gespannte Querdrähte, im Bereich der Beine elektrisch leitend zu einem Horn zu komplettieren.

Beine als zumindest Teil eines Landegestells für eine Drohne haben sich in der Praxis etabliert.

In einer bevorzugten Variante dieser Ausführungsform sind die Beine und / oder der Hornkörper von dem Grundkörper separat ausgeführt. Insbesondere sind diese also am Grundkörper anbringbar und / oder von diesem abnehmbar. Auch dies vereinfacht beispielsweise den Transport einer Drohne.

In einer bevorzugten Variante dieser Ausführungsform ist wenigstens eines der Beine an dem Grundkörper schwenkbar angebracht. Die Schwenkung kann dabei insbesondere um eine, aber auch um mehrere Achsen erfolgen. Insbesondere ist also das Bein zwischen der oben genannten Arbeitsposition und der Stauposition schwenkbar. Insbesondere sind alle Beine schwenkbar angebracht; oder zumindest alle bis auf eines.

In einer bevorzugten Ausführungsform ist das Horn zumindest teilweise als eine Strebenstruktur ausgeführt, also eine zumindest teilweise aus einzelnen Streben (Rippen, Zweigen, Ästen, Filamenten usw.) aufgebaut. Insbesondere ist in Kombination mit der o.g. Ausführungsform der Hornkörper und/oder der Hornanteil zumindest teilweise als eine Strebenstruktur ausgeführt. Die Strebenstruktur ist insbesondere gebildet durch Streben bzw. eine Netz- / Gitterstruktur aus gekreuzten und / oder nicht gekreuzten, insbesondere parallelen Streben. Insbesondere existieren also gekreuzte netzartige oder nebeneinander verlaufende parallele Streben innerhalb der Strebenstruktur. Insbesondere bildet der o.g. Hornanteil eine Reihe von ersten Streben. Der Hornkörper bildet dann eine Reihe von hierzu nicht parallel verlaufenden zweiten "Quer-"Streben. So lässt sich insbesondere die oben genannte Struktur nach Art einer Wäschespinne besonders vorteilhaft aufbauen.

In einer bevorzugten Ausführungsform ist die Strebenstruktur zumindest teilweise durch wenigstens eine flexible Strebe und / oder wenigstens eine starre Strebe gebildet. So ergibt sich insbesondere wieder die o.g. Struktur der "Wäschespinne" mit den starren Streben in Form der Arme der Wäschespinne und den flexiblen Streben in Form der an den Armen gehaltenen Wäscheleine. Flexible Streben sind zum Beispiel in Form von Filamenten oder Drähten ausgeführt. Starre Streben sind zum Beispiel in Form von Stangen bzw. Hornanteilen von Beinen ausgeführt. Insbesondere können durch eine Kombination von starren und flexiblen Streben falt- bzw. aufspannbare Horn-Ausführungsformen nach Art der o.g. Wäschespinne / Regenschirm usw. besonders vorteilhaft erstellt werden. Insbesondere sind die flexiblen Streben dann in der Arbeitsposition auf Zug gerade verlaufend gespannt und nehmen somit eine definierte Ortsposition bzw. Form ein.

In einer bevorzugten Variante einer Kombination beider Ausführungsform oben ist die Strebenstruktur dadurch gebildet, dass Querstreben zwischen den Beinen gehalten sind. Die Streben sind dann zumindest teilweise als flexible Filamente ausgeführt, insbesondere wenn die Beine schwenkbar sind. So können diese in der Arbeitsposition (Ausschwenken der Beine) gespannt und in der Stauposition (Beine eingeschwenkt) flexibel entspannt zu sein. Insbesondere weisen die Beine Durchführungen auf, um Streben, z.B. in Form von Drähten, aufzunehmen. Insbesondere ist dabei ein Draht über mehrere Beine durchgehend geführt, umläuft die Drohne das Horn bildend also in Umfangsrichtung um die Strahlrichtung.

In einer bevorzugten Ausführungsform ist also ganz allgemein zumindest ein Teil des Horns, insbesondere der Hornkörper, flexibel ausgeführt. Der Hornkörper bzw. der betreffende Anteil des Horns ist dann in der Arbeitsposition insbesondere auf Zug gespannt, entfaltet, glatt, jedoch faltbar, knickbar, biegbar, um in eine andere als die Arbeitsposition zu gelangen, insbesondere in die Stauposition. Hierzu eignet sich insbesondere die oben genannte Streben- / Netz- / Gitterstruktur, eine Folie, ein Gewebe usw.

In einer bevorzugten Variante beider oben genannten Ausführungsform ist der Hornkörper, insbesondere als Anteil der Strebenstruktur, zumindest in dem Arbeitszustand bzw. der Arbeitsposition aufgrund von Zug in seiner das Horn bildenden Form gehalten. Insbesondere ist der Hornkörper dabei zwischen wenigstens einem der Beine und/oder dem Grundkörper der Drohne auf Zug gehalten. Mit anderen Worten gleicht der Hornkörper im Arbeitszustand bzw. in der Arbeitsposition dann einem gespannten Netz / Gewebe / Folie mit z.B. gespannten Drähten und Streben bzw. bildet eine Gitter- oder eine Rippenstruktur.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt.

Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung beruht auf der Erkenntnis, dass zum gefahrlosen Landen einer HPEM-Drohne (zum Aussenden eines HPEM-Pulses) ein Landegestell benötigt wird. Andererseits wird an der gleichen Position / Seite der Drohne (also "unten", dort wo sich das Landegestell befindet) ein Horn benötigt bzw. ist ein solches gewünscht, um einen HPEM Puls eines Resonators (HPEM Quelle) gezielt zu verstärken. "Gleiche Position" ist also so zu verstehen: im Bereich des Landegestells, wenn eine Abstrahlung der Pulse "nach unten" (Bezug auf eine bestimmungsgemäße Lande-/Ruhelage der Drohne) gewünscht ist. Ein Metallgestell als Landegestell (z.B. vier Metallbeine) führt dabei zu metallischen Reflexionen. Ein zusätzliches Kunststoffgestell zusätzlich zu einem herkömmlichen Horn schränkt den Bauraum des Horns ein.

Die Erfindung beruht daher auf der Idee einer Kombination beider Funktionen, nämlich des gefahrlosen Landens und des Verstärkens des HPEM Pulses, in einem (zumindest teilweise kombinierten) einzigen Bauteil / Baugruppe, nämlich durch ein Landegestell mit wenigstens metallischen Anteilen, welches wie ein Horn geformt ist bzw. als Horn wirkt.

Gemäß der Erfindung erfolgt ein Reichweitengewinn der HPEM-Quelle ohne Verzicht auf ein Landegestell bei Gewichts- und Bauraumoptimierung. Es erfolgt eine Verbringung eines Horns in eine Drohnenlandeplattform. Insbesondere ist die Drohne im Sinne der oben genannten DE 10 2015 008 296 A1 zur autonomen Detektion und Bekämpfung eines Ziels in Form einer Target-Drohne, ertüchtigt.

Gemäß der Erfindung lässt sich zum Beispiel ein Verstärkungsfaktor von 3dB zwischen dem ungeformten HPEM-Puls und dem geformten HPEM-Puls erreichen. Insbesondere sind die Beine der Landeplattform bzw. Landegestells aus Metall hergestellt. Insbesondere befinden sich jedoch innerhalb des Horns - zumindest in der Arbeitsposition - keinerlei weitere metallische Bauteile, insbesondere Bestandteile eines Landegestells, welche in Wirkrichtung der HPEM Quelle (zum Beispiel eines Resonators) Reflexionen verursachen könnten.

Gemäß der Erfindung ergibt sich also ein Landegestell einer Drohne mit einem integrierten Horn bzw. entspricht das Landegestell zumindest teilweise einem Horn.

Gemäß der Erfindung ergibt sich ein Horn zur Verstärkung einer HPEM-Quelle (des von dieser abgestrahlten ungeformten HPEM Pulses), auf welchem die Drohne wie bei einem konventionellen Landegestell landen kann. Die vorliegende Erfindung verbessert insbesondere die Abwehr von Kleindrohnen mittels luftgestützte HPEM-Technologie, insbesondere also eine Abwehrdrohne gemäß der DE 10 2015 008 296 A1.

Gemäß der Erfindung ergibt sich insbesondere: eine Drohne in Form einer Abwehrdrohne zur Abwehr einer Kleindrohne, insbesondere eines ferngesteuerten Helikopters, umfassend auch die Ausführungsformen der DE 10 2015 008 296 A1. Es ergibt sich eine Drohne mit einem Landegestell, welches zeitgleich bzw. in einer Doppelfunktion als bzw. zur Verstärkung des HPEM Pulses dient, vergleichbar einer Hornantenne ("Horn"). Es ergibt sich eine Drohne mit einem Horn, welches insbesondere in der Arbeitsposition einen Öffnungswinkel von mindestens 5° und maximal 85°, vorzugsweise 30° verfügt. Es ergibt sich eine Abwehr-Drohne, welche ein rundes, ovales oder eckig geformtes Horn verwendet bzw. über ein solches verfügt. Es ergibt sich eine Abwehrdrohne, welche mithilfe von Software autonom fliegt, Targets (Ziele) ausfindig macht und insbesondere nach Patentanspruch 4 der DE 10 2015 008 296 A1 die Auslöseeinrichtung selbständig aktiviert und deaktiviert.

Es wird daher auf folgendes anmeldungsfremde Dokument verwiesen:
Die Drohne ist insbesondere eine Abwehrdrohne zur Abwehr einer Kleindrohne, welche Abwehrdrohne in verschiedenen Ausführungsformen in der DE 10 2015 008 296 A1 offenbart ist: Alle Ausführungsformen der Abwehrdrohne der DE 10 2015 008 296 A1, insbesondere die Ausführungsformen gemäß der elf Patentansprüche der DE 10 2015 008 296 A1, stellen daher bevorzugte Ausführungsformen der vorliegend beanspruchten Drohne dar.

Das vorliegend offenbarte Horn ist der in DE 10 2015 008 296 A1 offenbarten HPEM-Einrichtung nachgeschaltet, um den hochenergetischen elektromagnetischen Puls in der Strahlrichtung abzustrahlen. Zumindest ein Teil des Horns ist dann als ein zumindest Teil des Landegestells der Abwehrdrohne ausgebildet.

Mit anderen Worten wird die Abwehrdrohne der DE 10 2015 008 296 A1 um das vorliegend offenbarte Horn erweitert, das zumindest teilweise auch Teil eines vorliegend offenbarten Landegestells der Abwehrdrohne ist. Zu bekämpfendes Ziel ist dann die Kleindrohne.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: stark schematisiert eine Drohne mit Horn in einer perspektivischen Prinzipdarstellung,
- Figur 2: die Drohne aus Figur 1 um 90° nach links verkippt und in eine Stauposition verbracht,
- Figur 3: als Detail III aus Figur 1 einen Ausschnitt aus einem Bein der Drohne,
- Figur 4: eine alternative Drohne im Querschnitt.

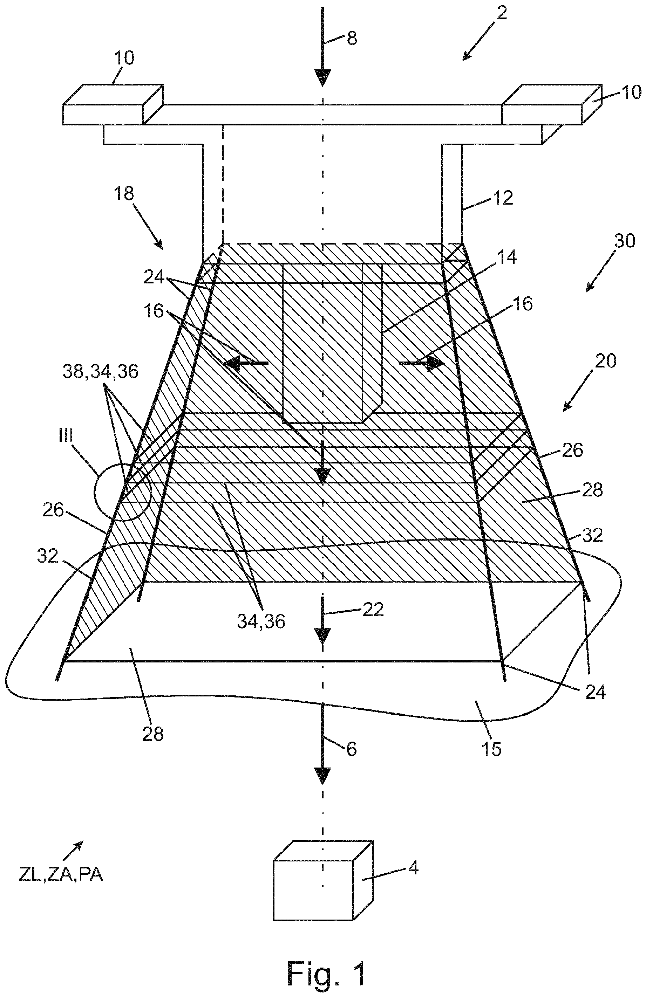

Figur 1 zeigt in stark vereinfachter und rein symbolischer Darstellung eine Drohne 2.

Diese dient zur Bekämpfung eines Ziels 4 mithilfe eines geformten HPEM-Pulses 6 (symbolisiert durch einen Pfeil). Die Drohne ist eine Senkrechtstart- bzw. -lande-Drohne und ist daher zu einem Flug, insbesondere zu einem Start bzw. einer Landung entlang einer Schwerkraftrichtung 8 (auch durch einen Pfeil symbolisiert) eingerichtet.

Hierzu ist die Drohne im vorliegenden Fall als Multicopter mit mehreren Propellern 10 ausgerüstet, von denen in Figur 1 symbolisch nur zwei Stück angedeutet sind. Die Propeller 10 sind Teil eines Grundkörpers 12 der Drohne.

Ein weiterer Teil des Grundkörpers 12 und damit der Drohne 2 ist eine HPEM-Quelle 14, hier ein Resonator. Diese dient zur Erzeugung und Abstrahlung eines ungeformten HPEM-Pulses 16 (auch durch Pfeile symbolisiert).

Die Drohne 2 befindet sich in einem Landezustand ZL und ruht bzw. steht daher bestimmungsgemäß auf einem ebenen Untergrund 15 und ist für einen Einsatz, d.h. für einen Senkrecht-Start entgegen der Schwerkraftrichtung 8, bereit.

Die Drohne 2 enthält neben dem Grundkörper 12 ein Landegestell 18. Dieses ist dazu eingerichtet, die restliche Drohne 2 (vor allem den Grundkörper 12) in dem vorliegend dargestellten Landezustand ZL zu tragen. Das Landegestell 18 weist bei der Drohne 2 insgesamt vier Beine 24 auf, welche am Grundkörper 12 der Drohne 2 befestigt sind. Die Beine 24 sind in der Figur durch verdickte Linien dargestellt.

Die Drohne ist in Figur 1 in einem Arbeitszustand ZA dargestellt, was weiter unten noch näher erläutert wird. In dem Arbeitszustand ZA enthält die Drohne 2 neben dem Grundkörper 12 weiterhin auch ein Horn 20. Das Horn 20 ist der HPEM Quelle 14 strahlungstechnisch, d.h. in Bezug auf den HPEM-Puls 16 bzw. dessen Abstrahlung, nachgeschaltet. Das Horn 20 ist dazu eingerichtet, den aus der HPEM Quelle 14 ausgestrahlten und in das Horn 20 eingestrahlten HPEM Puls 16 zu führen bzw. zu formen, hier zu bündeln und zu verstärken, und in bzw. entlang einer Strahlrichtung 22 (auch durch einen Pfeil und eine gestrichelte Linie symbolisiert) als den geformten HPEM Puls 6 wieder abzustrahlen.

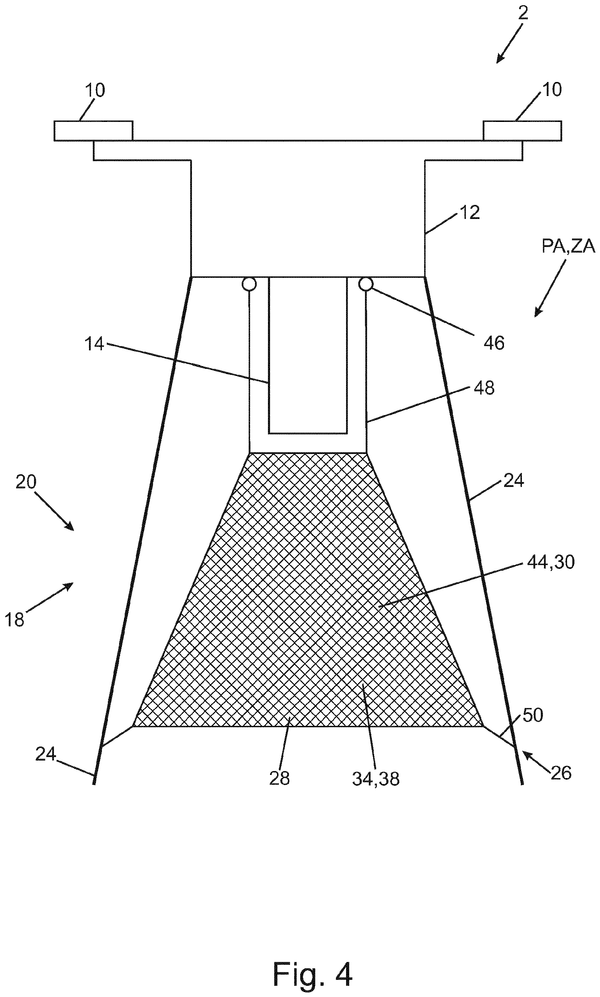

Ein Teil des Horns 20 ist hierbei durch das Landegestell 18 bzw. einen jeweiligen Teil der vier Beine 24 gebildet. Das Horn 20 ist hier bzw. hat die Form eines im Querschnitt quer zur Strahlrichtung 22 rechteckigen, sich in Figur 4 nach unten hin öffnenden Trichters. Zwei Seiten (in der Figur die "hintere" und "linke") des Trichters sind in der Figur 1 durch Strichelung hervorgehoben. Bezüglich einer Querrichtung zur Strahlrichtung 22 ist das Horn 20 also hier rechteckig ausgeführt.

Im Landezustand ZL weist die Strahlrichtung 22 in Richtung der Schwerkraftrichtung 8. Eine Bestrahlung des Ziels 4 mit dem geformten HPEM Puls 6 ist hier nur symbolisch angedeutet, und bezieht sich auf einen Flug der Drohne 2, wenn diese den Landezustand ZL verlassen hat. Die Strahlrichtung 22 ist fest an die Geometrie / Lage von HPEM Quelle 14 und Horn 20 bzw. Grundkörper 12 gekoppelt, zeigt jedoch auch im Flug, wenn die Drohne 2 sich in der gleichen Orientierung wie in Fig. 1 / Landezustand ZL befindet, "nach unten".

Die Beine 24 ragen am in der Figur 1 unteren Ende etwas aus dem Horn 20 heraus. Im Landezustand ZL sitzen daher die Beine 24 mit ihren in der Figur unteren Enden, nicht jedoch das Horn 20, auf dem Untergrund 15 auf.

Das Horn 20 ist hierbei zum Teil durch einen Teilabschnitt der Beine 24 in Form eines Hornanteils 26 der Beine 24 gebildet. Andererseits ist das Horn durch einen Hornkörper 28 gebildet bzw. vervollständigt, der an den Beinen 24 unmittelbar angebracht ist. Vorliegend bilden also die Hornanteile 26 der Beine 24 vier Kanten des Horns 20, der Hornkörper 28 dessen vier ebene Flachseiten. In der Figur entspricht der Hornanteil 26 der Beine dem schraffiert gekennzeichneten Abschnitt der Beine 24. Vorliegend sind die Beine 24 und der Hornkörper 28 separat von dem Grundkörper 12 bzw. der restlichen Drohne 2 ausgeführt, nämlich von diesem abnehmbar bzw. an diesem anbringbar.

Das Horn 20 ist hier als eine Strebenstruktur 30 ausgeführt. Die Beine 24 bzw. deren Hornanteile 26 bilden hierbei starre Streben 32. Zwischen den Beinen 24 gespannte metallische Drähte bilden flexible Streben 34 der Strebenstruktur 30. Die flexiblen Streben 34 sind hierbei als Querstreben 36 zwischen den Beinen 24 gehalten.

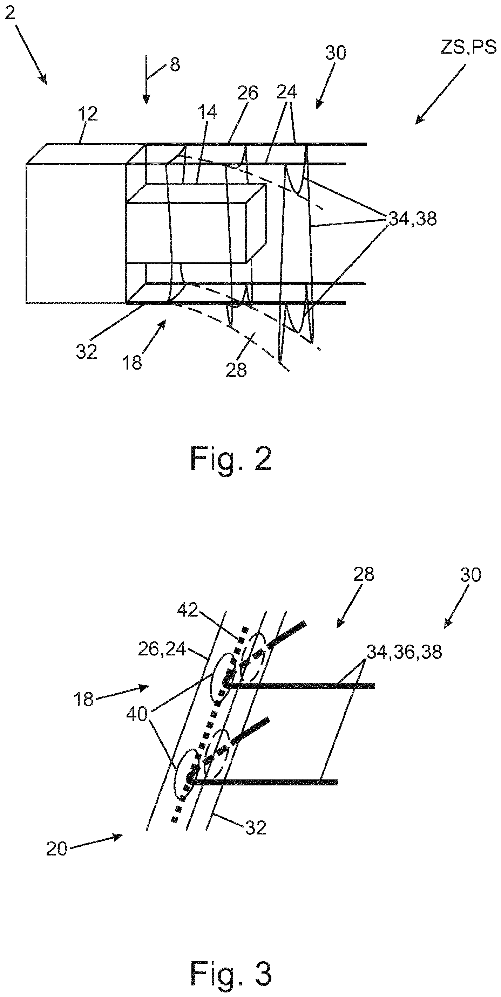

Figur 2 zeigt - nochmals stärker stilisiert - die Drohne 2 aus Figur 1, nun jedoch nicht in einem Arbeitszustand ZA, sondern in einem Stauzustand ZS. Die Drohne ist hierzu um 90° nach links verkippt worden. In dem Stauzustand ZS ist die Drohne 2 nicht einsatzbereit, sondern zum Transport hergerichtet.

Aufgrund der flexiblen Streben 34 ist es möglich, dass das "Horn 20" gemäß Figur 2 eine Stauposition PS einnimmt, in der die entsprechenden Drähte (vormals Querstreben 36) lose werden, also nicht mehr zwischen den Beinen 24 straff bzw. gerade gespannt sind, sondern schlaff durchhängen. Aus diesem Grund verliert das Horn 20 auch seine Form bzw. existiert als solches dann nicht mehr in dem Stauzustand ZS.

Figur 2 zusammen mit Figur 1 illustriert also, dass das Horn 20 zusammen mit dem Landegestell 18 zwischen einer Arbeitsposition PA in dem Arbeitszustand ZA und einer Stauposition PS in dem Stauzustand ZS veränderbar ist. Im Stauzustand ZS ist kein eigentliches bzw. tatsächliches Horn 20 mehr vorhanden. Denn der zwischen den Beinen 24 vormals aufgespannte Hornanteil 26 ist hier schlaff zusammengefaltet bzw. hängt ungespannt durch. Der Zustand ist in etwa vergleichbar mit einem zusammengefalteten Regenschirm oder einer zusammengeklappten Wäschespinne. Der Verlauf des einstmaligen Horns 20 in seiner schlaffen Form ist in Figur 2 gestrichelt angedeutet.

Der Übergang zwischen Stauposition PS und Arbeitsposition PA ist deshalb möglich, da die Beine 24 an dem Grundkörper 12 schwenkbar angebracht sind, also ausgehend von Figur 1 bezüglich der Strahlrichtung 22 radial einwärts einschwenkbar sind.

Aus Gründen der Übersichtlichkeit sind in den Figuren 1 und 2 jeweils nur wenige der Streben 32, 34 gezeichnet, obschon diese über das gesamte Horn 20 dicht und gleichmäßig verteilt sind, um das Horn 20 auszubilden. Dank der flexiblen Streben 34 ist also ein Teil des Horns 20, hier nämlich der Hornkörper 28 zwischen den Beinen 24 flexibel ausgeführt. In der Arbeitsposition PA ist der Hornkörper 28 aufgrund von Zug zwischen den Beinen 24 in seiner das Horn 20 bildenden Form gehalten. Die Form ist hier wie oben erläutert der im Querschnitt rechteckige sich in der Figur 1 nach unten erweiternde Horntrichter.

Figur 3 zeigt im Detail, wie die Streben 34 dadurch gebildet sind, dass ein Draht 38 durch Durchbrechungen 40 in den Beinen 24 hindurchgeführt ist. Die Beine 24 sind hier aus elektrisch leitendem Werkstoff, hier Metall hergestellt. Hierdurch entsteht elektrischer Kontakt zwischen den jeweiligen Drähten 38 und dem Bein 24 und ein in sich leitfähiges Horn 20 wird so gebildet. In einer alternativen Ausführungsform ist das Bein 24 aus elektrisch isolierendem Material hergestellt. Um das Horn 20 elektrisch leitend zu komplettieren, ist dann ein Verbindungsdraht 42 vorgesehen. Dieser verläuft entlang des Beines 24 und kontaktiert die jeweiligen Drähte 38, um diese zum insgesamt leitfähigen Horn 20 elektrisch zu verbinden. Weil eine alternative Ausführungsform, ist der Verbindungsdraht 42 hier nur gestrichelt angedeutet.

Figur 4 zeigt eine weitere alternative Drohne 2, hier im Querschnitt. Das Horn 20 bzw. der Hornkörper 28 ist hier als Strebenstruktur 30 aus einem Gewebe 44, hier einem flexiblen Stahlgewebe, aufgebaut. Dieses ist aufgrund von Zug in seiner Form in der Arbeitsposition PA gehalten. Dies wiederum ist dadurch bewerkstelligt, dass am Grundkörper 12 Haken 46 angebracht sind. In diese sind mit dem Gewebe 44 verbundene Zugseile 48, hier Stahlseile, lösbar eingehängt. Weiterhin sind (lösbare) Zugfedern 50 vorgesehen, welche den Hornkörper 28 an den Beinen 24 auf Zug halten bzw. das Horn 20 in seine Form spannen. Hier ist der Hornkörper 28 also mittelbar an den Beinen 24 gehalten. Die Beine 24 leisten insofern einen Beitrag zum Horn 20, dass sie den Hornkörper 28 hier halten, tragen bzw. spannen. Das Gewebe 44 ist also wieder eine Strebenstruktur 30 aus hier zueinander gekreuzten flexiblen Streben 34 in Form von Stahldrähten. Auch hier sind Beine 24 sowie das Horn 20 wieder am Grundkörper 12 und das Horn 20 auch an den Beinen 24 anbringbar bzw. abnehmbar.

So kann auch diese Drohne 2 leicht in eine nicht dargestellte Stauposition PS bzw. einen Stauzustand ZS verbracht werden, zum Beispiel zu Transportzwecken.

### Bezugszeichenliste

- 2: Drohne
- 4: Ziel
- 6: HPEM-Puls (geformt)
- 8: Schwerkraftrichtung
- 10: Propeller
- 12: Grundkörper
- 14: HPEM-Quelle
- 15: Untergrund
- 16: HPEM-Puls (ungeformt)
- 18: Landegestell
- 20: Horn
- 22: Strahlrichtung
- 24: Bein
- 26: Hornanteil
- 28: Hornkörper
- 30: Strebenstruktur
- 32: Strebe (starr)
- 34: Strebe (flexibel)
- 36: Querstrebe
- 38: Draht
- 40: Durchbrechung
- 42: Verbindungsdraht
- 44: Gewebe
- 46: Haken
- 48: Zugseil

- ZL: Landezustand
- ZA: Arbeitszustand
- ZS: Stauzustand
- PS: Stauposition
- PA: Arbeitsposition

## Patentansprüche

1. Drohne (2) zur Bekämpfung eines Ziels (4) mit Hilfe eines geformten HPEM-Pulses (6),
- wobei die Drohne (2) zu einem Flug entlang einer Schwerkraftrichtung (8) eingerichtet ist,
- mit einem Landegestell (18), das dazu eingerichtet ist, die restliche Drohne (2) in einem bestimmungsgemäßen Landezustand (ZL) zu tragen,
- mit einer HPEM-Quelle (14) zur Abstrahlung des ungeformten HPEM-Pulses (16),
- wobei zumindest in einem Arbeitszustand (ZA) der Drohne (2):
- die Drohne ein Horn (20) enthält, das der HPEM-Quelle (14) strahlungstechnisch nachgeschaltet ist und das dazu eingerichtet ist, den aus der HPEM-Quelle (14) in das Horn (20) eingestrahlten ungeformten HPEM-Puls (16) zu führen und in einer Strahlrichtung (22) als geformten HPEM-Puls (6) wieder abzustrahlen, **dadurch gekennzeichnet, dass**
- zumindest ein Teil des Horns (20) durch zumindest einen Teil des Landegestells (18) gebildet ist.

2. Drohne (2) nach Anspruch 1,
**dadurch gekennzeichnet,**
**dass** die Strahlrichtung (22) zumindest im Landezustand (ZL) in Richtung der Schwerkraftrichtung (8) weist.

3. Drohne (2) nach einem der vorhergehenden Ansprüche,
**dadurch gekennzeichnet,**
**dass** das Horn (20) bezüglich der Strahlrichtung (22) im Querschnitt rund oder oval oder eckig ausgeführt ist.

4. Drohne (2) nach einem der vorhergehenden Ansprüche,
**dadurch gekennzeichnet,**
**dass** das Horn (20) zusammen mit dem Landegestell (18) zwischen einer Stauposition (PS) in einem Stauzustand (ZS) und einer Arbeitsposition (PA) in dem Arbeitszustand (ZA) veränderbar ist.

5. Drohne (2) nach einem der vorhergehenden Ansprüche,
**dadurch gekennzeichnet,**
**dass** das Landegestell (18) wenigstens drei an einem Grundkörper (12) der Drohne (2) befestigte Beine (24) aufweist und das Horn (20) durch zumindest einen Hornanteil (26) der Beine (24) und einen an den Beinen (24) angebrachten Hornkörper (28) gebildet ist.

6. Drohne (2) nach Anspruch 5,
**dadurch gekennzeichnet,**
**dass** die Beine (24) und / oder der Hornkörper (28) von dem Grundkörper (12) separat ausgeführt ist.

7. Drohne (2) nach einem der Ansprüche 5 bis 6,
**dadurch gekennzeichnet,**
**dass** wenigstens eines der Beine (24) an dem Grundkörper (12) schwenkbar angebracht ist.

8. Drohne (2) nach einem der vorhergehenden Ansprüche,
**dadurch gekennzeichnet,**
**dass** das Horn (20) zumindest teilweise als eine Strebenstruktur (30) ausgeführt ist.

9. Drohne (2) nach Anspruch 8,
**dadurch gekennzeichnet,**
**dass** die Strebenstruktur (30) zumindest teilweise durch wenigstens eine flexible Strebe (34) und / oder wenigstens eine starre Strebe (32) gebildet ist.

10. Drohne (2) nach einem der Ansprüche 8 bis 9 in Verbindung mit einem der Ansprüche 5 bis 7,
**dadurch gekennzeichnet,**
**dass** die Strebenstruktur (30) dadurch gebildet ist, dass Querstreben (36) zwischen den Beinen (24) gehalten sind.

11. Drohne (2) nach einem der vorhergehenden Ansprüche,
**dadurch gekennzeichnet,**
**dass** zumindest ein Teil des Horns (20) flexibel ist.

12. Drohne (2) nach Anspruch 11 in Verbindung mit einem der Ansprüche 5 bis 6,
**dadurch gekennzeichnet,**
**dass** der Hornkörper (28) zumindest in dem Arbeitszustand (ZA) aufgrund von Zug in seiner das Horn (20) bildenden Form gehalten ist.

## Claims

1. Drone (2) for combating a target (4) using a shaped HPEM pulse (6),
- wherein the drone (2) is configured for a flight along a direction of gravity (8),
- comprising a landing gear (18), which is configured for carrying the rest of the drone (2) in an intended landing state (ZL),
- comprising an HPEM source (14) for emitting the unshaped HPEM pulse (16),
- wherein at least in a working state (ZA) of the drone (2):
- the drone contains a horn (20), which is connected, in radiation terms, downstream of the HPEM source (14) and which is configured to guide the unshaped HPEM pulse (16) that has been emitted from the HPEM source (14) into the horn (20) and to emit it again in a beam direction (22) as a shaped HPEM pulse (6), **characterized in that**
- at least part of the horn (20) is formed by at least part of the landing gear (18).

2. Drone (2) according to Claim 1,
**characterized**
**in that** the beam direction (22) points towards the direction of gravity (8) at least in the landing state (ZL).

3. Drone (2) according to either of the preceding claims,
**characterized**
**in that** the horn (20) is circular or oval or angular in cross section with respect to the beam direction (22).

4. Drone (2) according to any of the preceding claims,
**characterized**
**in that** the horn (20) together with the landing gear (18) can be moved between a stowage position (PS) in a stowage state (ZS) and a working position (PA) in the working state (ZA).

5. Drone (2) according to any of the preceding claims,
**characterized**
**in that** the landing gear (18) has at least three legs (24) attached to a main body (12) of the drone (2) and the horn (20) is formed by at least one horn portion (26) of the legs (24) and a horn body (28) attached to the legs (24).

6. Drone (2) according to Claim **5,**
**characterized**
**in that** the legs (24) and/or the horn body (28) is/are formed separately from the main body (12).

7. Drone (2) according to either of Claims 5 and 6,
**characterized**
**in that** at least one of the legs (24) is pivotally attached to the main body (12).

8. Drone (2) according to any of the preceding claims,
**characterized**
**in that** the horn (20) is at least partially designed as a strut structure (30).

9. Drone (2) according to Claim 8,
**characterized**
**in that** the strut structure (30) is at least partially formed by at least one flexible strut (34) and/or at least one rigid strut (32).

10. Drone (2) according to either of Claims 8 and 9 in combination with any of Claims 5 to 7,
**characterized**
**in that** the strut structure (30) is formed by transverse struts (36) being held between the legs (24).

11. Drone (2) according to any of the preceding claims,
**characterized**
**in that** at least part of the horn (20) is flexible.

12. Drone (2) according to Claim 11 in combination with either of Claims 5 and 6,
**characterized**
**in that** the horn body (28) is held at least in the working state (ZA) due to tension in its shape forming the horn (20).

## Revendications

1. Drone (2) destiné à combattre une cible (4) à l'aide d'une impulsion HPEM mise en forme (6),
- le drone (2) étant conçu pour voler le long d'une direction de la gravité (8),
- comprenant un train d'atterrissage (18) qui est conçu pour porter le drone (2) restant dans un état d'atterrissage (ZL) conforme à la destination,
- comprenant une source HPEM (14) destinée à émettre l'impulsion HPEM non mise en forme (16),
- au moins dans un état de fonctionnement (ZA) du drone (2) :
- le drone contenant un cornet (20) qui est monté en aval de la source HPEM (14) du point de vue de la technique de rayonnement et qui est conçu pour guider l'impulsion HPEM non mise en forme (16) rayonnée dans le cornet (20) à partir de la source HPEM (14) et pour l'émettre à nouveau dans une direction de rayonnement (22) sous forme d'impulsion HPEM mise en forme (6), **caractérisé en ce que**
- au moins une partie du cornet (20) est formée par au moins une partie du train d'atterrissage (18).

2. Drone (2) selon la revendication 1,
**caractérisé en ce**
**que** la direction de rayonnement (22) est orientée, au moins dans l'état d'atterrissage (ZL), dans la direction de la gravité (8).

3. Drone (2) selon l'une des revendications précédentes,
**caractérisé en ce**
**que** le cornet (20) est réalisé en section transversale ronde ou ovale ou anguleuse par rapport à la direction de rayonnement (22).

4. Drone (2) selon l'une des revendications précédentes,
**caractérisé en ce**
**que** le cornet (20) peut être modifié, conjointement avec le train d'atterrissage (18), entre une position de rangement (PS) dans un état de rangement (ZS) et une position de travail (PA) dans l'état de travail (ZA).

5. Drone (2) selon l'une des revendications précédentes,
**caractérisé en ce**
**que** le train d'atterrissage (18) possède au moins trois jambes (24) fixées à un corps de base (12) du drone (2) et le cornet (20) est formé par au moins une portion de cornet (26) des jambes (24) et un corps de cornet (28) monté sur les jambes (24).

6. Drone (2) selon la revendication 5,
**caractérisé en ce**
**que** les jambes (24) et/ou le corps de cornet (28) sont réalisés séparément du corps de base (12).

7. Drone (2) selon l'une des revendications 5 à 6,
**caractérisé en ce**
**qu'**au moins l'un des pieds (24) est monté de manière pivotante sur le corps de base (12).

8. Drone (2) selon l'une des revendications précédentes,
**caractérisé en ce**
**que** le cornet (20) est réalisé au moins partiellement sous la forme d'une structure d'entretoises (30).

9. Drone (2) selon la revendication 8,
**caractérisé en ce**
**que** la structure d'entretoises (30) est formée au moins partiellement par au moins une entretoise flexible (34) et/ou au moins une entretoise rigide (32).

10. Drone (2) selon l'une des revendications 8 à 9, en association avec l'une des revendications 5 à 7,
**caractérisé en ce**
**que** la structure d'entretoises (30) est formée par le fait que des entretoises transversales (36) sont maintenues entre les pieds (24).

11. Drone (2) selon l'une des revendications précédentes,
**caractérisé en ce**
**qu'**au moins une partie du cornet (20) est flexible.

12. Drone (2) selon la revendication 11, en association avec l'une des revendications 5 à 6,
**caractérisé en ce**
**que** le corps de cornet (28) est maintenu, au moins dans l'état de travail (ZA), en raison de la traction, dans sa forme formant le cornet (20).
